Europäisches Patentamt

European Patent Office

Office européen des brevets

(19)

(11) Veröffentlichungsnummer: **0 486 858 A1**

## (12) EUROPÄISCHE PATENTANMELDUNG

(21) Anmeldenummer: **91118642.7**

(22) Anmeldetag: **31.10.91**

(51) Int. Cl.5: **B29C 47/92**, B29C 47/20

(30) Priorität: **19.11.90 DE 4036868**

(43) Veröffentlichungstag der Anmeldung:
**27.05.92 Patentblatt 92/22**

(84) Benannte Vertragsstaaten:
**DE ES FR GB IT**

(71) Anmelder: **Windmöller & Hölscher**
**Münsterstrasse 50**
**W-4540 Lengerich(DE)**

(72) Erfinder: **Saatkamp, Richard, Dipl.-Ing.**
**Wechter Mark 60**
**W-4540 Lengerich(DE)**
Erfinder: **Voss, Klaus-Peter, Dipl.-Ing.**
**Lessingstrasse 10**
**W-4540 Lengerich(DE)**

(74) Vertreter: **Gossel, Hans K., Dipl.-Ing.**
**Lorenz-Seidler-Gossel et al**
**Widenmayerstrasse 23**
**W-8000 München 22(DE)**

(54) **Vorrichtung zum Messen der Foliendicke an einem zu einer Folienschlauchblase aufgeblasenen Folienschlauch in einer Blasfolienanlage.**

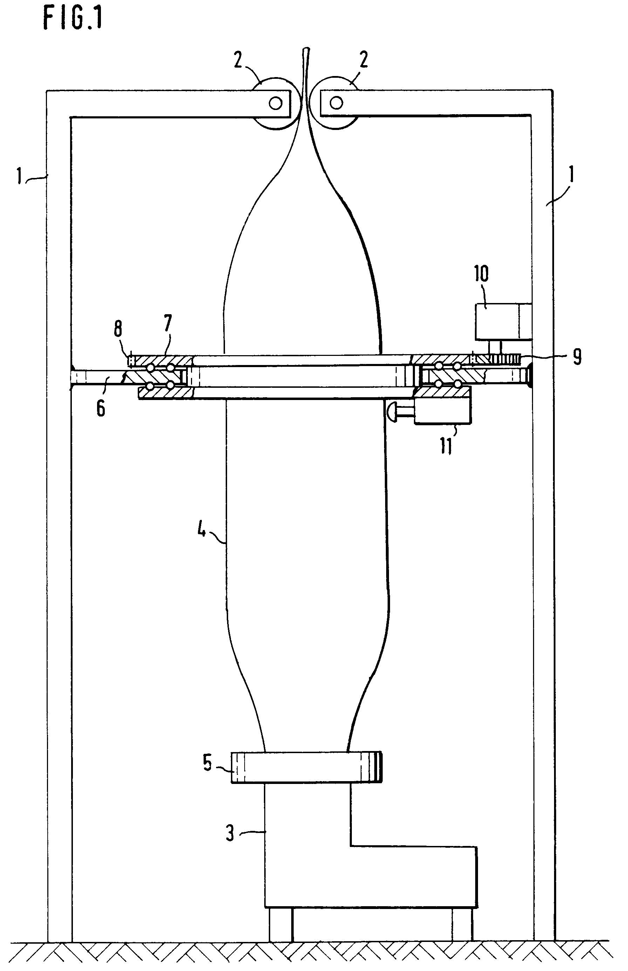

(57) Eine Vorrichtung zum Messen der Foliendicke eines aus einer rotierenden Ringspaltdüse eines Extruders extrudierten und zwischen der Ringspaltdüse und einem im Gestell drehbar gelagerten Flachlegewalzenpaar zu einer Folienschlauchblase aufgeblasenen Schlauches aus thermoplastischem Kunststoff besteht aus einem die Foliendicke über den Umfang der Folienschlauchblase messenden Meßkopf. Um die für eine schnelle Regelung der Foliendicke erforderlichen Meßwerte auch dann zu erhalten, wenn die Ringspaltdüse eine ständig rotierende oder reversierende Drehbewegung mit äußerst geringer Winkelgeschwindigkeit ausführt, ist der Meßkopf (11,11') auf einem die Schlauchfolienblase (4,4') einfassenden Ring (7,7',13) befestigt, der in dem Gestell (1,1') mit zu der Achse der Schlauchfolienblase (4,4') zusammenfallender Drehachse drehbar gelagert und mit einem Drehantrieb (10,10',16) versehen ist. Der Drehantrieb treibt den Ring mit einer Geschwindigkeit an, die in bestimmbarer Weise von der Winkelgeschwindigkeit der Ringspaltdüse (5,5') abweicht (Fig. 1).

FIG.1

EP 0 486 858 A1

Die Erfindung betrifft eine Vorrichtung zum Messen der Foliendicke eines aus einer rotierenden Ringspaltdüse eines Extruders extrudierten und zwischen der Ringspaltdüse und einem im Gestell drehbar gelagerten Flachlegewalzenpaar zu einer Folienschlauchblase aufgeblasenen Schlauches aus thermoplastischen Kunststoff mit einem die Foliendicke über den Umfang der Folienschlauchblase messenden Meßkopf.

Bei der Herstellung von Schlauchfolien lassen sich Dickenschwankungen über den Umfang der Schlauchfolie nicht vermeiden, weil aus der Ringspaltdüse der Blasfolienanlage der schmelzflüssige Folienschlauch, der anschließend durch Aufblasen zu einer Folienschlauchblase in Längs- und Umfangsrichtung gereckt wird, mit über seinen Umfang unterschiedlicher Viskosität extrudiert wird. Diese unterschiedliche Viskosität ergibt sich aus Inhomogenitäten der Kunststoffschmelze und aus deren unterschiedlicher Erwärmung. Weiterhin weist der Ringspalt der Extrusionsdüse über seinen Umfang nicht immer absolut die gleiche Breite auf, so daß es auch hierdurch zu Dickenschwankungen in der Schlauchfolie kommen kann.

Um trotz dieser unvermeidbaren Dickenschwankungen in der hergestellten Schlauchfolienbahn aus dieser zylindrische Wickel herstellen zu können, führt die Ringspaltdüse des Extruders eine ständig rotierende oder aber eine in beiden Richtungen über 360° reversierende Drehbewegung aus, so daß in der aus dem flachgelegten Folienschlauch hergestellten Rolle längsverlaufende dikkere Bereiche nach der Art des Seilwickelns gleichmäßig über die Rolle verteilt werden.

Die Ringspaltdüse kann sich dabei ständig oder reversierend zu dem stationären Extruder drehen und mit einem entsprechenden Drehantrieb versehen sein oder der Extruder kann insgesamt auf einen ständig drehenden oder reversierend drehenden Drehtisch angeordnet sein, wobei dann die Drehachse mit der Achse der Ringspaltdüse fluchtet.

Trotz der wendelartigen oder sinusförmigen Verteilung der dünneren und dickeren Bereiche über den Umfang der Schlauchfolie durch die rotierende reversierende Extrusion ist es erforderlich, die Dickenschwankungen in einem vorbestimmten Toleranzbereich zu halten, was eine Dickenregelung notwendig macht. Um diese Dickenregelung vornehmen zu können, muß die Dickenverteilung der Wandung des aufgeblasenen Folienschlauches über seinen Umfang oberhalb seiner Erstarrungs- oder Frostlinie gemessen werden. Entsprechend der Messung wird dann die Temperaturverteilung und/oder die Breite des Ringspaltes über den Umfang der Ringspaltdüse geändert.

Bei der Herstellung von Schlauchfolien unter Verwendung von gleichsinnig rotierenden oder über 360° reversierenden Extruderköpfen wird zur Messung der Dicke der Wandung des aufgeblasenen Folienschlauches ein gestellfester Meßkopf verwendet, der mit einem vorbestimmten Abstand zur Folienwandung angeordnet ist. Eine zur Regelung auswertbare von dem Meßkopf erzeugte Signalfolge ergibt sich doch erst, wenn dieser einmal den gesamten Umfang der Schlauchblase abgetastet hat, also einmal den gesamten Umfang der Folienblase umfahren hat. Da aber die Extruderköpfe mit äußerst geringer Winkelgeschwindigkeit rotieren, so daß eine vollständige Umdrehung zwischen 10 Min. und 1 Std. liegen kann, wird ein verwertbarer Signalblock erst nach einer verhältnismäßig langen Zeit erhalten. Um bei derartig langsam rotierenden Extruderköpfen überhaupt mit dem ermittelten Meßwerten eine Regelung durchführen zu können, muß die Regelung selbst äußerst träge aufgebaut sein. Dies bedeutet, daß beim Anfahren der Blasfolienanlage sehr hohe Verluste entstehen, da wegen der langsam ansprechenden Regelung erhebliche Folienlänge durchlaufen müssen, bis sich Schlauchfolien ergeben, deren Dicken in dem zulässigen Toleranzbereich liegen.

Aufgabe der Erfindung ist es daher, eine Meßvorrichtung der eingangs angegebenen Art zu schaffen, die auch dann die für eine schnelle Regelung erforderlichen Meßwerte liefert, wenn die Ringspaltdüse eine ständig rotierende oder reversierende Drehbewegung mit äußerst geringer Winkelgeschwindigkeit ausführt.

Erfindungsgemäß wird diese Aufgabe dadurch gelöst, daß der Meßkopf auf einem die Schlauchfolienblase einfassenden Ring befestigt ist, der in dem Gestell mit zu der Achse der Schlauchfolienblase zusammenfallender Drehachse drehbar gelagert und mit einem Drehantrieb versehen ist, der den Ring mit einer Winkelgeschwindigkeit antreibt, die in bestimmbarer Weise von der Winkelgeschwindigkeit der Ringspaltdüse abweicht.

Bei der erfindungsgemäßen Vorrichtung führt der Meßkopf relativ zu der rotierend oder reversierend extrudierten Folienschlauchblase eine Drehbewegung mit bestimmter oder bestimmbarer Differenzwinkelgeschwindigkeit aus, so daß die erforderlichen Meßwerte zu einer schnellen Regelung der Dicke des Folienschlauches erhalten werden können. Dabei kann die Differenzdrehzahl des Ringes bzw. des Meßkopfes in der Weise bestimmt und festgelegt werden, daß eine schnelle Einregelung der Foliendicke des extrudierten Folienschlauches auf die Solldicke erfolgt und die Verluste beim Anfahren gering gehalten werden können.

Bei ständig und gleichsinnig rotierender Ringspaltdüse kann ein im Gestell drehbar gelagerter und den Meßkopf tragender Ring vorgesehen sein, der von einem elektrischen Antrieb relativ zu der rotierenden Ringspaltdüse mit einer bestimmten Differenzdrehzahl angetrieben ist. Dabei kann der Ring in gleicher Richtung wie die Ringspaltdüse oder aber auch mit entgegengesetzter Drehrichtung rotieren, wobei die Drehgeschwindigkeit des Ringes absolut gesehen, geringer sein kann, wenn diese der Drehbewegung der Ringspaltdüse entgegengesetzt ist.

Nach einer anderen Ausgestaltung der Erfindung ist vorgesehen, daß bei einer reversierend rotierenden Ringspaltdüse ein erster Ring im Gestell drehbar gelagert ist, der mit der gleichen relativen Winkelgeschwindigkeit angetrieben ist, wie die Ringspaltdüse, so daß der Ring relativ zu der Ringspaltdüse stillsteht, und daß an dem ersten Ring ein zweiter den Meßkopf tragender Ring drehbar gelagert ist, der relativ zu dem ersten Ring mit einer gleichbleibenden der gewünschten Meßgeschwindigkeit entsprechenden Winkelgeschwindigkeit durch einen elektrischen Antrieb angetrieben ist. Die gewünschte Meßgeschwindigkeit wird daher dem Meßkopf allein über den elektrischen Antrieb des zweiten Ringes erteilt.

Dem elektrischen Antrieb für den zweiten Ring kann der Strom über Schleifringe zugeführt werden.

Die von den Meßköpfen erzeugten Signale können durch Funk oder Schleifringe übertragen werden.

Ist der Meßkopf bei reversierend angetriebener Ringspaltdüse auf einem einzigen mit entsprechender Differenzdrehzahl reversierendem Ring angeordnet, ist nach einer weiteren Ausgestaltung der Erfindung vorgesehen, daß die von dem Meßkopf erzeugten Signale durch Schleppkabel übertragen werden.

Ausführungsbeispiele der Erfindung werden nachstehend anhand der Zeichnung näher beschrieben. In dieser zeigt

Fig. 1 eine Blasfolienanlage mit einem drehenden Extrusionskopf mit Ringspaltdüse in schematischer Seitenansicht und

Fig. 2 eine der Fig. 1 entsprechende Ansicht einer Blasfolienanlage mit einem über 360° reversierenden Extrusionskopf.

Die aus Fig. 1 ersichtliche Blasfolienanlage besteht aus einem ortsfesten Gestell oder Rahmen 1, der in seinem oberen Bereich mit seinem Abzugswalzenpaar 2 versehen ist. Von diesem Abzugswalzenpaar wird der vom Extruder 3 extrudierte und aufgeblasene Schlauch 4 flachgelegt, wobei dem Extruder 3 ein ständig rotierender Kopf 5 zugeordnet ist, so daß Dickenfehler im Folienschlauch gleichmäßig verteilt werden können. Oberhalb des drehenden Kopfes 5 ist mit dem Rahmen 1 ein Tragring 6 fest verschweißt, auf dem ein innerer Drehkranz 7 läuft, der den Tragring 6 U-förmig umgreift. Der Kranz 7 weist in seinem oberen Bereich eine umlaufende Verzahnung 8 auf, in die das Ritzel 9 eines Antriebsmotors 10 eingreift. Dieser Motor 10 ist mit dem Rahmen 1 fest verbunden. Aus der Figur 1 ist zu erkennen, daß mit dem Kranz 7 der eigentliche Meßkopf 11 verbunden ist. Durch diese Einrichtung ist es nunmehr möglich, unabhänig von der Rotationsbewegung des Kopfes 5 innerhalb kürzester Zeit einen verwertbaren Signalblock zu erhalten, weil die Umlaufgeschwindigkeit des Meßkopfes unabhängig von der Drehgeschwindigkeit des Kopfes 5 allein durch den Antriebsmotor 10 bestimmt werden kann.

Die von dem ständig rotierenden Meßkopf 1 gewonnenen Signale können entweder über Schleifringe oder über Funk zu einem nicht dargestellten Steuergerät übertragen werden.

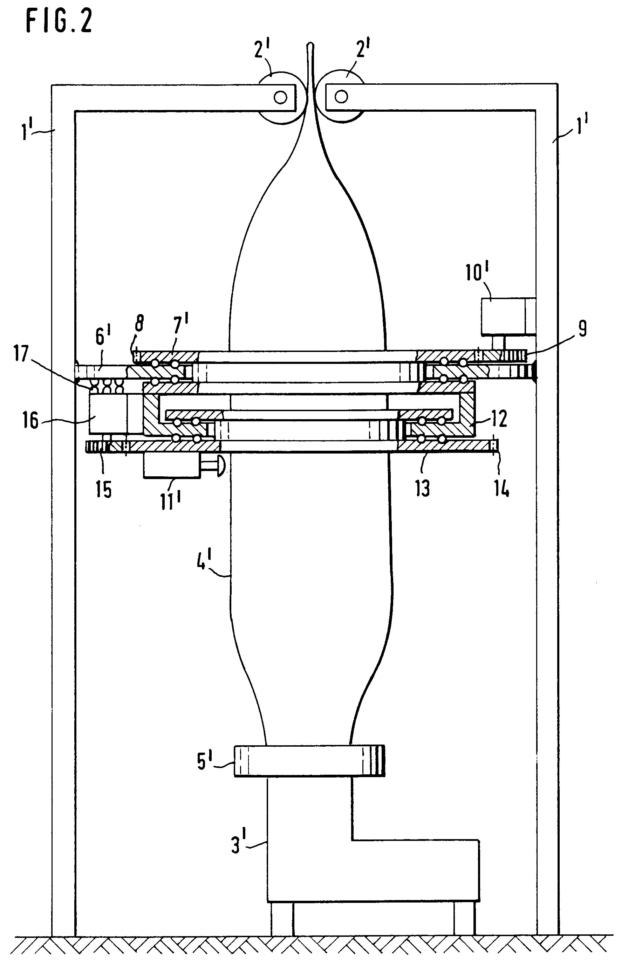

Die Fig. 2 zeigt ebenso wie die Fig. 1 ein Rahmengestell 1' mit Abzugswalzen 2'. Der entsprechende Extruder 3' weist in diesem Fall keinen rotierenden, sondern einen reversierenden Kopf 5' auf. Oberhalb dieses Kopfes 5' ist wie im Falle der Fig. 1 ein Tragring 6' vorgesehen, der von einem Drehkranz 7' umgriffen wird. Über den Motor 10' wird dieser Drehkranz 7' mit genau der Winkelgeschwindigkeit reversierend angetrieben, wie der Extruderkopf 5'. Abweichend vom Aufbau nach Fig. 1 ist mit dem inneren Drehkranz 7' ein zweiter Tragring 12 fest verbunden, der von einem zweiten Drehkranz 13 umgriffen wird. An diesem Drehkranz 13 ist der Meßkopf 11' befestigt. Ebenso wie der Drehkranz 7' weist auch der Drehkranz 13 eine äußere Verzahnung 14 auf, in die das Ritzel 15 eines Motors 16 eingreift. Dieser Motor 16 ist mit dem Tragring 12 fest verschraubt und erhält seine Antriebsenergie über Schleifringe 17. Wird nun bei dieser Vorrichtung lediglich der Motor 10' derart betätigt, daß der Drehkranz 7' mit derselben Winkelgeschwindigkeit reversiert wie der Extruderkopf 5', hat der Meßkopf 11' stets ein und denselben Bezugspunkt zur Schlauchblase 4'. Um nun einen verwertbaren Signalblock zu erhalten, wird der Motor 16 eingeschaltet, so daß der Drehkranz 13 und damit auch der Meßkopf 11' mit einer Winkelgeschwindigkeit angetrieben werden kann, die völlig unabhängig von der Winkelgeschwindigkeit des reversierenden Extruderkopfes 5' ist.

Die von einem reversierenden Meßkopf erzeugten Signale können durch Schleppkabel übertragen werden, wobei der beim Reversieren zurückzulegende Winkelbereich des Meßkopfes selbstverständlich abhängig ist von der Winkelgeschwindigkeit des reversierenden Kopfes. Bei einer Ausführungsform mit einem Drehkranz bedeutet dies, daß der Meßkopf, sobald er in Drehrichtung des Kopfes rotiert, einen größeren Weg zurücklegen muß, als wenn er entgegen der Drehbewegung des drehenden Kopfes fährt. Voraussetzung ist auch, daß die Winkelgeschwindigkeit des Meßkopfes natürlich größer ist als die Winkelgeschwindigkeit des ständig in einer Richtung rotierenden Kopfes.

**Patentansprüche**

1. Vorrichtung zum Messen der Foliendicke eines aus einer rotierenden oder reversierenden Ringspaltdüse eines Extruders extrudierten und zwischen der Ringspaltdüse und einem im Gestell drehbar gelagerten Flachlegewalzenpaar zu einer Folienschlauchblase aufgeblasenen Schlauches aus thermoplastischen Kunststoff mit einem die Foliendicke über den Umfang der Folienschlauchblase messenden Meßkopf,

   **dadurch gekennzeichnet,**

   daß der Meßkopf (11,11') auf einem die Schlauchfolienblase (4,4') einfassenden Ring (7,7',13) befestigt ist, der in dem Gestell (1,1') mit zu der Achse der Schlauchfolienblase (4,4') zusammenfallender Drehachse drehbar gelagert und mit einem Drehantrieb (10,10',16) versehen ist, der den Ring mit einer Geschwindigkeit antreibt, die in bestimmbarer Weise von der Winkelgeschwindigkeit der Ringspaltdüse (5,5') abweicht.

2. Vorrichtung nach Anspruch 1, dadurch gekennzeichnet, daß bei ständig und gleichsinnig rotierender Ringspaltdüse (5) ein im Gestell (1) drehbar gelagerter und dem Meßkopf (11) tragender Ring (7) vorgesehen ist, der von einem elektrischen Antrieb (10) relativ zu der rotierenden Ringspaltdüse mit einer bestimmten Differenzdrehzahl angetrieben ist.

3. Vorrichtung nach Anspruch 1, dadurch gekennzeichnet, daß bei einer revisierend rotierenden Ringspaltdüse (5') ein erster Ring (7') im Gestell (1') drehbar gelagert ist, der mit der gleichen reversierenden Winkelgeschwindigkeit angetrieben ist wie die Ringspaltdüse (5'), so daß dieser relativ zu der Ringspaltdüse stillsteht, und daß an dem ersten Ring (7') ein zweiter den Meßkopf (11') tragender Ring (13) drehbar gelagert ist, der relativ zu dem ersten Ring (7') mit einer gleichbleibenden der Meßgeschwindigkeit entsprechenden Winkelgeschwindigkeit durch einen elektrischen Antrieb (16) angetrieben ist.

4. Vorrichtung nach Anspruch 3, dadurch gekennzeichnet, daß dem elektrischen Antrieb (16) für den zweiten Ring (13) der Strom über Schleifringe (17) zugeführt wird.

5. Vorrichtung nach einem der Ansprüche 1-4, dadurch gekennzeichnet, daß die von dem Meßkopf erzeugten Signale durch Funk oder Schleifringe übertragen werden.

6. Vorrichtung nach Anspruch 1, dadurch gekennzeichnet, daß bei einem Reversieren mit Differenzwinkelgeschwindigkeit zu der Ringspaltdüse angetriebenen, den Meßkopf tragenden Ring die von diesem erzeugten Signale durch Schleppkabel übertragen werden.

FIG.1

FIG.2

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 339 403 (H. UPMEIER ET AL) | 1-3 | B29C47/92 |
| Y | * Spalte 3, Zeile 42 - Zeile 49 * | 4-6 | B29C47/20 |
|  | * Spalte 2, Zeile 22 - Zeile 24 * | | |
|  | * Spalte 6, Zeile 20 - Zeile 25; Abbildungen * | | |
|  | --- | | |
| Y | GB-A-2 160 654 (ZUMBACH ELECTRONIC AG) | 4-6 | |
|  | * Seite 3, Zeile 38 - Zeile 44; Abbildungen 4-6 * | | |
|  | --- | | |
| A | US-A-4 351 785 (H. UPMEIER ET AL) | 1-3 | |
|  | * Spalte 2, Zeile 54 - Zeile 63; Abbildungen * | | |
|  | --- | | |
| A | FR-A-1 478 674 (INDUSTRIAL NUCLEONICS CORP.) | 1,2 | |
|  | * Zusammenfassung; Abbildungen * | | |
|  | --- | | |
| A | DE-A-3 903 078 (BARMAG AG) | 1 | |
|  | * Spalte 3, Zeile 16 - Zeile 21; Abbildung 1 * | | |
|  | ----- | | |

|  |
|---|
| RECHERCHIERTE SACHGEBIETE (Int. Cl.5) |
| B29C |

Der vorliegende Recherchenbericht wurde für alle Patentansprüche erstellt

| Recherchenort | Abschlußdatum der Recherche | Prüfer |
|---|---|---|
| DEN HAAG | 21 FEBRUAR 1992 | BELIBEL C. |